Europäisches Patentamt

European Patent Office

Office européen des brevets

(11) Veröffentlichungsnummer: **0 513 426 A1**

# (12) EUROPÄISCHE PATENTANMELDUNG

(21) Anmeldenummer: **91108051.3**

(22) Anmeldetag: **17.05.91**

(51) Int. Cl.5: **F23M 5/02**, C03B 5/235

(43) Veröffentlichungstag der Anmeldung:
**19.11.92 Patentblatt 92/47**

(84) Benannte Vertragsstaaten:
**BE DE ES FR IT LU NL**

(71) Anmelder: **HOTWORK INTERNATIONAL S.A.**
**14, Rue Aldringen**
**L-2951 Luxemburg(LU)**

(72) Erfinder: **Der Erfinder hat auf seine Nennung**
**verzichtet**

(74) Vertreter: **Hoffmann, Klaus, Dr. rer. nat. et al**
**Hoffmann . Eitle & Partner Patentanwälte**
**Postfach 81 04 20 Arabellastrasse 4**
**W-8000 München 81(DE)**

(54) Düsenblock zum Anschluss eines Brenners oder einer Brennerlanze an eine Ofenanlage.

(57) Düsenblock (7) zum Anschluß eines Brenners (5) an eine Ofenanlage, umfaßt einen Düsenstein (10) und ein darin einsetzbares Einsatzteil (11) mit einer Anschlußeinrichtung (20) für den Brenner, wobei sich eine im Düsenblock (7) gebildete Öffnung (19) von der Brennstoffaustrittsöffnung des Brenners zum Brennraum hin trichterförmig erweitert, wobei der Düsenstein (10) und das Einsatzteil (11) derart gestaltet sind, daß die Austrittsöffnung des Brenners nahe an der Ebene liegt, die durch die brennraumseitige Wandung des Düsenblockes bestimmt ist.

Der Düsenblock weist an seiner Außenfläche eine Auffangrinne (22) auf.

Fig. 3

Fig. 4

EP 0 513 426 A1

Die Erfindung betrifft einen Düsenblock zum Anschluß eines Brenners oder einer Brennerlanze an eine Ofenanlage.

Es ist bekannt, zum Anschluß einer Brennstofflanze an eine Ofenanlage einen Düsenblock vorzusehen, der in eine Wandung der Ofenanlage eingesetzt wird.

Häufig wird die Brennstofflanze offen in den Düsenblock eingesetzt, so daß Nebenluft zutreten kann, was jedoch nicht zu optimalen Bedingungen für die Verbrennung führt, da dadurch Falschluf mit eingesaugt wird.

Die spezielle Gestaltung des Düsenblockes hängt von den jeweiligen Betriebsbedingungen ab, unter denen die Ofenanlage betrieben wird. Bei einer Änderung der Betriebsbedingungen, beispielsweise bei einem Wechsel der Brennstoffart, war es daher bisher notwendig, auch den Düsenblock zu wechseln, wozu er aus der Ofenanlage ausgebaut werden mußte, was zeitraubend war.

Für gasbefeuerte Anlagen ist auch schon ein Düsenkopf bekannt, der den Zutritt von Nebenluft weitgehend verhindert und aus einem äußeren Düsenstein besteht, welcher in eine Wandung der Feuerungsanlage eingesetzt wird, sowie aus einem inneren Düsenstein, der als Einsatz in den äußeren Düsenstein lösbar eingesetzt und mit dem Kopfteil einer Gaslanze verbunden werden kann. Obgleich der innere Düsenstein im äußeren Düsenstein derart angeordnet ist, daß er beispielsweise für die Zwecke der Erneuerung durch einen anderen Düsenstein austauschbar ist, kann dieser bekannte Düsenkopf nicht für den Betrieb mit flüssigen Brennstoffen verwendet werden, da ein ziemlich langer Öffnungskegel zwischen der Mündung der Brennstofflanze und der brennraumseitigen Fläche des Düsenblockes Druckverhältnisse schafft, welche bei Einsatz flüssigen Brennstoffes eine Rezirkulation von Brennstofftröpfchen vom Brennraum zurück in den Öffnungskegel des Düsenblockes bewirken. Die rezirkulierenden Brennstofftröpfchen verbrennen im Öffnungskegel des Düsenkopfes nur unvollständig, so daß sich Rückstände auf den Flächen dieses Öffnungskegels absetzen. Der Öffnungskegel verkokt und setzt sich nach relativ kurzer Betriebsdauer zu, weshalb der Düsenblock rasch unbrauchbar wird. Selbst wenn im Betrieb mit Gasfeuerung ein derartiger Düsenblock zu verhältnismäßig günstigen Verbrennungsbedingungen führt, wird aus den vorgenannten Gründen bei Umstellung auf einen Betrieb mit flüssigem Brennstoff unter Verzicht auf das Einsatzteil die Öllanze in offener Anordnung in den Düsenstein eingeführt, um Störungen des Betriebes durch Verkoken und Zusetzen des Einsatzteiles zu vermeiden.

Der Erfindung liegt die Aufgabe zugrunde, einen zweiteiligen, aus einem Außenstein und einem Einsatz bestehenden Düsenblock zu schaffen, der eine einfache und rasche Umstellung der Feuerungsanlage von gasförmigen Brennstoffen auf flüssige Brennstoffe und umgekehrt ermöglicht.

Eine weitere Aufgabe besteht darin, störende Ablagerungen im Düsenblock zu vermeiden.

Erfindungsgemäß wird diese Aufgabe mit den Merkmalen des Patentanspruchs 1 bzw. mit den Merkmalen des Patentanspruchs 14 gelöst.

Weiterbildungen der Erfindung ergeben sich aus den Unteransprüchen.

Einzelheiten und Vorteile erfindungsgemäßer Ausführungsformen werden nachfolgend anhand der Zeichnungen näher beschrieben. Darin zeigen

Fig. 1    einen Glasschmelzofen mit einem Brenner in schematischer Darstellung,

Fig. 2    den Bereich der Brennstoff- und Luftzuführung (Brennermaul) in einem Glasschmelzofen nach Fig. 1 im Schnitt,

Fig. 3    eine Ausführungsform eines Düsenblockes für eine Gaslanze mit Teilen des Brennermaules im Schnitt,

Fig. 4    eine Ausführungsform eines Düsenblockes für eine Öllanze mit Teilen des Brennermaules im Schnitt und

Fig. 5    eine dem Gegenstand von Fig. 3 ähnliche Ausführungsform.

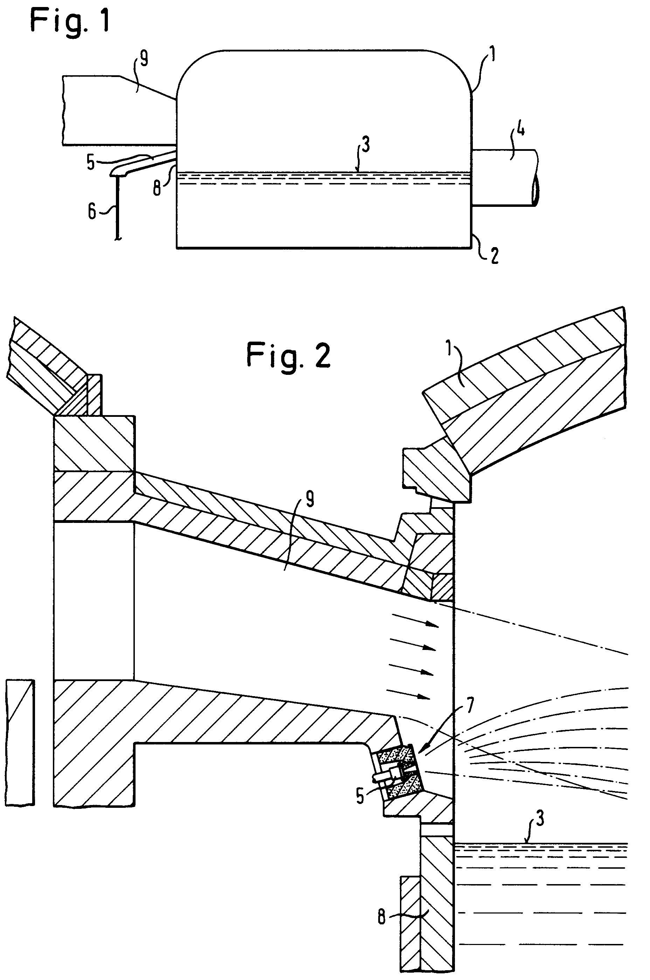

Der in Fig. 1 dargestellte Glasschmelzofen umfaßt ein Ofengehäuse 1 und eine Schmelzgutwanne 2, welcher über eine nicht dargestellte Zuführung Rohmaterial zur Herstellung einer Glasschmelze zugeführt wird, wobei die flüssige Glasschmelze einen Pegel 3 bildet, der über einen Ablauf 4 den Schmelzofen zur Weiterverarbeitung verläßt.

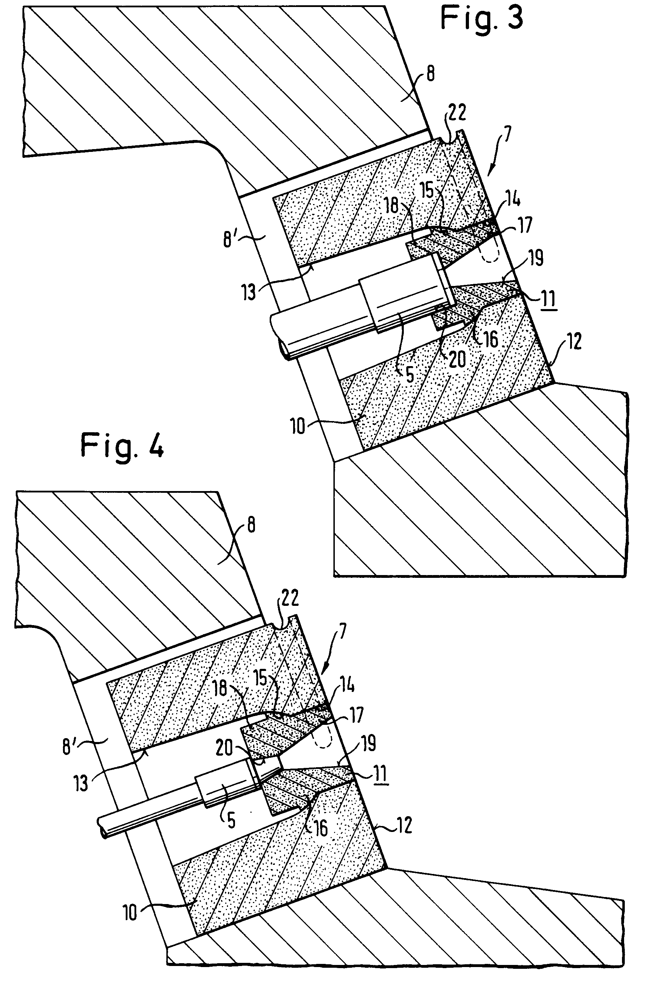

Zum Erhitzen der Glasschmelze dient eine in Fig. 1 und 2 nur schematisch dargestellter Brennerlanze 5 für Gas oder Öl als Brennstoff und mit einer Zuleitung 6 zur Zuführung des Brennstoffes. Die Brennerlanze 5 ist auf einen über dem Pegel 3 der Glasschmelze liegenden Brennraum im Ofengehäuse 1 gerichtet und dazu mittels eines in Fig. 2 nur schematisch und in Fig. 3 und 4 näher dargestellten Düsenblockes 7 in eine Wandung 8 des Ofengehäuses 1 eingesetzt. Über der Brennerlanze 5 mündet in den Brennraum des Ofengehäuses 1 ein Zufuhrkanal 9 für die Verbrennungsluft, mit der sich das aus der Brennerlanze 5 austretende Gas oder Öl vermischt und in dem über dem Pegel 3 befindlichen Oberofenraum unter Erhitzung des Schmelzgutes verbrennt. Die dabei entstehenden Verbrennungsgase werden über einen nicht dargestellten Abzug unter Nachnutzung der Rauchgasrestwärme aus dem Schmelzofen herausgeleitet und in üblicher Weise einem Schornstein zugeführt.

Wie auf Fig. 3 und 4 ersichtlich ist, besteht der Düsenblock 7 zum Ansetzen des Brenners 5 an die Wandung 8 des Ofengehäuses 1 aus einem Düsenstein 10, der in eine entsprechende Öffnung 8' in der Wandung 8 des Ofengehäuses 1 austauschbar, jedoch dicht eingesetzt ist, und aus einem im Düsenstein 10 verstellbar und auswechselbar gelagerten Einsatzteil 11. Der Düsenstein 10 wie auch das Einsatzteil 11 sind vorzugsweise aus Keramikmaterialien gebildet, können aber auch aus anderen geeigneten Materialien bestehen.

Der Düsenstein 10 besitzt eine zylindrische Bohrung 13, die nahe der zum Inneren des Ofens gerichteten Innenfläche 12 des Düsensteines in eine zylindrische koaxiale Bohrung 14 kleineren Durchmessers übergeht. Im Übergangsbereich zwischen den beiden Bohrungsquerschnitten 13, 14 ist eine kugelschalenförmige Ringzone 15 ausgebildet, die den Lagersitz für das Einsatzteil 11 bildet.

Das Einsatzteil 11 ist rotationssymmetrisch und hat in vorzugsweise einstückiger Ausbildung ein einen Teil einer Kugel bildendes Lagerteil 16 größeren Durchmessers und ein zylindrisches Fußteil 17 sowie ein zylindrisches Anschlußstück 18, in welches die Brennerlanze 5 dicht eingeführt wird. Dabei wird die Lanze mit dem vorderen Düsenkopf so weit in den Düseneinsatz 11 eingeführt, daß die Stirnfläche der Düse eventuell unter Zuhilfenahme eines temperaturbeständigen elastischen Zwischenringes gegen den Düseneinsatz 11 abgedichtet wird. Das Ansatzstück 18 dient außerdem auch dazu, nach Entfernen der Brennerlanze das Einsatzteil 11 mit Hilfe einer speziellen Zange aus dem Düsenstein 10 zu entfernen bzw. ein anderes Einsatzteil 11 in den Düsenstein einzusetzen.

Das Lagerteil 16 des Einsatzteiles 11 bildet mit dem kugelschalenförmigen Abschnitt 15 der Bohrung des Düsensteines 10 einen praktisch luftdichten Paßsitz. Das zylindrische Fußteil 17 des Einsatzteiles 11 ragt dabei in die zylindrische Bohrung 14 des Düsensteines 10.

Das Einsatzteil 11 hat eine Bohrung 19, welche sich auf der dem Ofen zugewandten Seite mit einem Öffnungswinkel von 30 bis 40° konisch erweitert, während zum Ansetzen der Brennerlanze 5 auf der dem Ofen abgewandten Seite der Bohrung 19 ein entsprechendes Paßstück 20 vorgesehen ist.

Der Düsenstein 10 ist in die Wandung 8 des Ofengehäuses derart eingesetzt, daß er mit der Mittelachse seiner Innenbohrung den durch den Luftzufuhrkanal 9 in das Ofengehäuse 1 eintretenden Luftstrom in einem Bereich über dem Schmelzgutpegel 3 schneidet und damit eine optimale Verbrennung sichert.

Durch die in Fig. 3 und 4 gezeigte Anordnung wird erreicht, daß der Austrittspunkt des Brennstoffstromes aus der Brennerlanze 5 in einer Ebene nahe bzw. vor der Ebene der Innenfläche 12 des Düsensteines 10 liegt, so daß der Öffnungskegel der konischen Bohrung 19 des Einsatzteiles 11 relativ kurz ist. Es ist also die axiale Länge der trichterförmigen Öffnung 19 des Einsatzteiles 11 kürzer als die Hälfte der Ausdehnung des Düsenblockes in axialer Richtung. Selbst wenn im Umgebungsbereich des aus der Brennerlanze 5 austretenden Brennstoffstrahles ein Unterdruck entsteht, kommt es daher praktisch kaum zu einer Rezirkulation von Brennstoffpartikeln aus dem Brennraum zurück in die konische Bohrung 19. Die Gefahr einer unvollständigen Verbrennung von rezirkuliertem Brennstoff im Bereich der Flammenwurzel in der konischen Bohrung 19 des Einsatzteiles 11 wird dadurch vermieden, so daß es dort auch nicht zur Ablagerung von Verbrennungsrückständen kommt.

Das nach Fig. 3 ausgebildete Einsatzteil 11 für den Anschluß einer Gaslanze zur Befeuerung der Ofenanlage mit gasförmigem Brennstoff kann somit leicht durch das nach Fig. 4 ausgebildete Einsatzteil 11 für den Anschluß einer Öllanze zur Befeuerung der Ofenanlage mit flüssigem Brennstoff ausgetauscht werden, was einen raschen Wechsel zwischen den beiden Betriebsarten ermöglicht, ohne daß beim Betrieb mit flüssigen Brennstoffen ein Verkoken und Zusetzen der konischen Bohrung 19 befürchtet werden muß.

Darüber hinaus wird mit dem erfindungsgemäßen Düsenblock 7 infolge der Vermeidung von Falschluftzufuhr durch den Brennstoffstrahl eine wesentlich wirtschaftlichere und deshalb schadstofärmere Verbrennung des Brennstoffes erreicht.

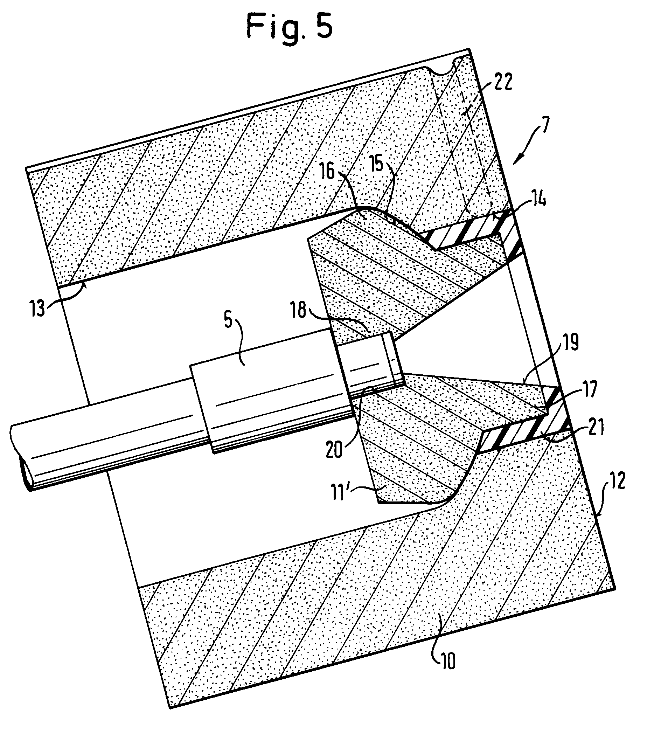

Wie Fig. 5 zeigt, kann das Einsatzteil 11' des Düsenblockes 7 bei einer Abwandlung der Ausführungsform gemäß Fig. 3 und 4 derart gestaltet werden, daß das zylindrische Fußteil 17' einen kleineren Durchmesser aufweist als der Bohrungsabschnitt 14 des Düsensteines 10. Dann kann das Einsatzteil 11' in dem kugelschalenförmigen Lagerteil 15 des Düsensteines nach allen Richtungen verschwenkt werden, um dadurch den Brennstoffstrahl intensiver mit der Verbrennungsluft vermischen zu können, wie weiter unten noch näher erläutert wird.

Hierzu wird die Brennerlanze 5 in einer nicht dargestellten Führung am Gehäuse 1 des Schmelzofens zusätzlich gehalten und geführt, damit das Gewicht der Brennerlanze nicht einseitig auf dem Düsenblock 7 lastet. Diese zusätzliche Halterung der Brennerlanze trägt dazu bei, daß das Einsatzteil 11 bzw. 11' seinen Paßsitz im Düsenstein 10 beibehält.

Durch die Möglichkeit zur Verstellung des Innensteines 11' und des daran angeschlossenen Brenners 5 im Düsenstein 10 des Düsenblockes 7 kann die Strömungsrichtung des aus der Brennerlanze 5 austretenden und die Bohrung 19 des Einsatzteiles 11' passierenden Brennstoffstromes in bezug auf den durch den Luftzufuhrkanal 9 in den Brennraum des Ofengehäuses 1 eintretenden Luftstrom verändert werden. Hierdurch ist auch die Richtung der sich im Strömungsweg des Brennstoffes hinter dem Düsenblock 7 über dem Schmelzgutpegel 3 bildenden Flamme einstellbar.

Bei der Ausführungsform gemäß Fig. 5 kann zwischen dem Fußteil 17 des Einsatzteiles 11' und dem Bohrungsabschnitt 14 des Düsensteines 10 ein elastischer Dichtungsring 21 vorgesehen werden, der Relativverstellungen des Einsatzteiles 11' in bezug auf den Düsenstein 10 ohne Verlust der Funktion einer luftdichten Abdichtung zwischen dem Einsnstein 25 und dem Düsenstein 24 zuläßt. Jedoch kann eine weitgehend luftdichte Abdichtung auch ohne den Dichtungsring 21 erzielt werden, wenn der Paßsitz des Einsatzteiles 11' im Düsenstein 10 hinreichend genau ist oder durch eine Restzirkulation von Brennstoff und Ablagerung von Rückständen im Bereich des Paßsitzes sich eine weitere Abdichtung ergibt.

Bei der Ausführungsform gemäß Fig. 5 ist ein Austausch des Einsatzteiles für gasförmigen Brennstoff durch ein Einsatzteil für flüssigen Brennstoff ebenso möglich wie bei der Ausführungsform gemäß Fig. 3 und 4.

Bei beiden oben beschriebenen Ausführungsformen kann das 11 bzw. 11' des Düsenblokkes 7 in seiner speziellen Formgebung und Ausbildung den Anforderungen angepaßt werden, die durch die Betriebsweise der Ofenanlage und durch die Art des Brennstoffes und der Brennstofflanze gestellt werden.

Da das Einsatzteil 11 bzw. 11' des Düsenblokkes 7 im Düsenstein leicht austauschbar angeordnet ist, kann der Düsenblock durch Wechseln des Einsatzteiles einfach und zeitsparend unterschiedlichen Betriebsbedingungen angepaßt werden, wobei der in die Ofenanlage eingesetzte Düsenstein 10 des Düsenblockes in seinem ofenseitigen Sitz verbleiben kann. So kann die gleiche Ofenanlage durch alleiniges Wechseln des Innensteines 11 bzw. 11' einfach und schnell von Gas- und Ölfeuerung und umgekehrt umgerüstet werden. Analoges gilt auch für einen Austausch des Innensteines im Falle von Verschleiß oder bei möglichen Störungen im Flammenbereich.

Die vorgeschlagene Anordnung hat den weiteren Vorteil, daß eine unkontrollierte Frischluftzufuhr auch bei Verstellbarkeit des Einsatzteiles 11' im Düsenstein 10 des Düsenblockes 7 und trotz der leichten Auswechselbarkeit des Einsatzteiless bei der Umrüstung auf unterschiedliche Betriebsbedingungen verhindert und die Energienutzung verbessert werden können.

Vorzugsweise weist der Düsenblock 7 eine Auffangrinne 22 auf. Diese ist bei den Ausführungsformen gemäß Fig. 3 bis 5 an der Außenfläche des Düsensteines 10 gebildet, und zwar nahe an der zum Brennraum gerichteten Wandung.

Der Düsenstein ist in die Öffnung 8' der Wandung 8 des Ofens derart eingesetzt, daß er mit seiner zum Brennraum gerichteten Wandung 12 gerade so weit über die Innenwand des Ofens nach innen zum Brennraum hin vorsteht, daß flüssige Bestandteile aus der Glasschmelze, die durch den Strom der Verbrennungsgase mitgerissen werden und sich vor Erreichen der Abzugsöffnung für die Verbrennungsgase an den über dem Düsenblock 7 liegenden Bereichen der vorzugsweise schräg verlaufenden Innenfläche der Wandung 8 des Ofens niederschlagen und an dieser Innenwand nach unten laufen, von der Auffangrinne 22 aufgefangen und seitlich an der Öffnung 19 des Düsenblockes 7 vorbeigeführt werden, ohne in die trichterförmige Öffnung 19 des Düsenblockes hineintropfen zu können. Ein störender Niederschlag in der Öffnung 19 wird dadurch vermieden.

Eine derartige Auffangrinne 22 ist auch bei anderen, an sich bekannten Arten von Düsenblökken vorteilhaft.

**Patentansprüche**

1. Düsenblock zum Anschluß eines Brenners oder einer Brennerlanze an eine Ofenanlage, umfassend einen Düsenstein (10) und ein darin einsetzbares Einsatzteil (11; 11') mit einer Anschlußeinrichtung (20) für den Brenner bzw. die Brennerlanze, wobei sich eine im Düsenblock gebildete Öffnung (19) von der Brennstoffaustrittsöffnung des Brenners bzw. der Brennerlanze zum Brennraum hin trichterförmig erweitert, dadurch **gekennzeichnet,** daß der Düsenstein (10) und das Einsatzteil (11; 11') derart gestaltet sind, daß die Austrittsöffnung des Brenners bzw. der Brennerlanze nahe an der Ebene liegt, die durch die brennraumseitige Wandung des Düsenblockes bestimmt ist.

2. Düsenblock nach Anspruch 1, dadurch **gekennzeichnet,** daß die axiale Länge der Öffnung (19) des Düsenblockes kürzer ist als die Hälfte der Ausdehnung des Düsenblockes in axialer Richtung.

3. Düsenblock nach Anspruch 1 oder 2, dadurch **gekennzeichnet,** daß die trichterförmige Öffnung (19) des Düsenblockes im Einsatzteil (11; 11') angeordnet ist.

4. Düsenblock nach einem der vorangehenden Ansprüche, dadurch **gekennzeichnet,** daß der Düsenstein (10) eine von der Außenseite her sich verjüngende Bohrung (13, 15, 14) aufweist und einen Lagersitz für das Einsatzteil (11; 11') bildet.

5. Düsenblock nach Anspruch 4, dadurch **gekennzeichnet,** daß die axiale Länge der den Lagersitz für das Einsatzteil (11; 11') bildenden Außenbohrung (13) länger ist als die axiale Länge der sich anschließenden Innenbohrung (14).

6. Düsenblock nach Anspruch 4 oder 5, dadurch **gekennzeichnet,** daß der Lagersitz für das Einsatzteil (11; 11') nahe der durch die brennraumseitige Wandung (12) des Düsensteines (10) bestimmte Ebene angeordnet ist.

7. Düsenblock nach einem der vorangehenden Ansprüche, dadurch **gekennzeichnet,** daß das Einsatzteil (11; 11') im Düsenstein (10) verstellbar gelagert ist.

8. Düsenblock nach Anspruch 7, dadurch **gekennzeichnet,** daß der im Düsenstein vorgesehene Lagersitz für das einsatzteil (11; 11') kugelschalenförmig ist und das Einsatzteil ein Lagerkugelteil (16) aufweist.

9. Düsenblock nach einem der vorangehenden Ansprüche, dadurch **gekennzeichnet,** daß der Düsenstein (10) eine annähernd zylindrische Außenbohrung (13) und eine hiermit fluchtende, annähernd zylindrische Innenbohrung (14) aufweist, die durch einen kugelschalenförmigen, den Lagersitz für das Einsatzteil (11; 11') bildenden Übergang (15) miteinander verbunden sind.

10. Düsenblock nach einem der vorangehenden Ansprüche, dadurch **gekennzeichnet,** daß das Einsatzteil (11') mit dem die Öffnung (19) bildenden Abschnitt in die Innenbohrung (14) des Düsensteines (10) ragt.

11. Düsenblock nach Anspruch 10, dadurch **gekennzeichnet,** daß das in die Innenbohrung (14) des Düsensteines (10) ragende Einsatzteil (11') von einem Dichtungsring (21) aus elastischem Material umgeben ist.

12. Düsenblock nach einem der vorangehenden Ansprüche, dadurch gekennzeichnet, daß das Einsatzteil (11') eine etwa kelchförmige Außenform hat und seine axiale Bohrung (19) sich zur Innenseite des Ofens hin konisch erweitert.

13. Düsenblock nach einem der vorangehenden Ansprüche, dadurch **gekennzeichnet,** daß Düsenstein (10) und/oder Einsatzteil (11; 11') aus keramischem Material hergestellt sind.

14. Düsenblock, dadurch **gekennzeichnet,** daß er an seiner Außenfläche eine Auffangrinne (22) aufweist.

15. Düsenblock nach Anspruch 14, dadurch **gekennzeichnet,** daß er in einer Wandung (8) einer Ofenanlage derart angeordnet ist, daß er mit der Auffangrinne über die Innenfläche der Wandung (8) vorsteht.

## Fig. 1

## Fig. 2

Fig. 3

Fig. 4

# Fig. 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | US-A-4 313 722 (YIGDALL) <br><br> * Spalte 3, Zeile 43 - Zeile 65 * <br> * Spalte 4, Zeile 33 - Zeile 35 * <br> * Spalte 5, Zeile 17 - Zeile 21 * <br> * Spalte 5, Zeile 42 - Zeile 55; Abbildungen 1,3 * <br><br>--- | 1,4,7,8, 13 | F23M5/02 <br> C03B5/235 |
| Y | FR-A-843 045 (SAINT GOBAIN) <br> * Seite 1, Zeile 27 - Zeile 36 * | 1,4,13 | |
| A | * Seite 1, Zeile 53 - Seite 2, Zeile 4 * <br> * Seite 2, Zeile 59 - Zeile 89; Abbildungen 1,2 * <br><br>--- | 2,5,6-8 | |
| Y | DE-A-3 149 987 (KÖRTING HANNOVER AG) <br> * Seite 11, Zeile 6 - Zeile 21; Abbildung 3 * <br>--- | 7,8 | |
| A | DE-A-3 218 392 (SORG) <br> * Seite 9, Zeile 15 - Seite 10, Zeile 5; Abbildung * <br>--- | 1,3,4 | **RECHERCHIERTE SACHGEBIETE (Int. Cl.5)** |
| A | GB-A-1 275 876 (WILCE) <br><br>----- | 7-9 | F23M <br> C03B <br> F270 <br> F23C |

Der vorliegende Recherchenbericht wurde für alle Patentansprüche erstellt

| Recherchenort | Abschlußdatum der Recherche | Prüfer |
|---|---|---|
| DEN HAAG | 17 JANUAR 1992 | COLI E. |

EPO FORM 1503 03.82 (P0403)